# EUROPEAN PATENT APPLICATION

(11) **EP 4 152 671 A1**
(43) Date of publication of application: **22.03.2023**
(21) Application number: 21822751.0
(22) Date of filing: 08.06.2021
(51) Int. Cl.: H04L 5/00, H04L 12/28, H04L 12/70

(54) **METHOD AND APPARATUS FOR TRANSMITTING/RECEIVING PHYSICAL PROTOCOL DATA UNIT**

(30) Priority: 08.06.2020 CN 202010515220
(71) Applicant: Huawei Technologies Co., Ltd., Longgang District, Shenzhen, Guangdong 518129 (CN)
(72) Inventor: LIANG, Dandan, Shenzhen, Guangdong 518129 (CN); GAN, Ming, Shenzhen, Guangdong 518129 (CN); LEI, Xianfu, Chengdu, Sichuan 611756 (CN); ZHOU, Zhengchun, Chengdu, Sichuan 611756 (CN); LIU, Chenchen, Shenzhen, Guangdong 518129 (CN); YANG, Yang, Chengdu, Sichuan 611756 (CN); LIN, Wei, Shenzhen, Guangdong 518129 (CN); TANG, Xiaohu, Chengdu, Sichuan 611756 (CN)
(74) Representative: Pfenning, Meinig & Partner mbB
(86) International application number: PCT/CN2021/098996
(87) International publication number: WO 2021/249405

(57) **Abstract**

This application provides a method for transmitting a physical layer protocol data unit. The method includes: generating a physical layer protocol data unit (physical layer protocol data unit, PPDU), where the PPDU includes a long training field (long training field, LTF), a length of a frequency-domain sequence of the LTF is greater than a first length, and the first length is a length of a frequency-domain sequence of an LTF of a PPDU transmitted over a channel whose bandwidth is 160 MHz; and sending the PPDU over a target channel, where a bandwidth of the target channel is greater than 160 MHz. A phase rotation at a non-pilot location, a plurality of puncturing patterns for 240 MHz/320 MHz, and multiple RU combination are considered for the frequency-domain sequence of the LTF provided in this embodiment of this application, so that the finally provided frequency-domain sequence of the LTF has a small PAPR value on multiple RU combination in the plurality of puncturing patterns for 240 MHz/320 MHz.

## Description

### TECHNICAL FIELD

This application relates to the field of wireless communication technologies, and more specifically, to a method and an apparatus for transmitting/receiving a physical layer protocol data unit.

### BACKGROUND

With development of the mobile internet and popularization of intelligent terminals, data traffic rapidly grows, and users impose increasingly high requirements on communication service quality. The Institute of Electrical and Electronics Engineers (institute of electrical and electronics engineers, IEEE) 802.11ax standard can no longer meet user requirements for a high throughput, a low jitter, a low delay, and the like. Therefore, it is urgent to develop a next-generation wireless local area network (wireless local area network, WLAN) technology, namely, the IEEE 802.11be standard.

Different from the IEEE 802.11ax, the IEEE 802.11be uses ultra-large bandwidths, such as 240 MHz and 320 MHz, to implement an ultra-high transmission rate and support a scenario of ultra-high user density. Therefore, how to design a long training field (long training field, LTF) sequence for a larger channel bandwidth is a problem worthy of concern.

### SUMMARY

This application provides a method and an apparatus for transmitting a physical layer protocol data unit, to design a long training field sequence for a larger channel bandwidth.

A first aspect provides a method for transmitting a physical layer protocol data unit. The method includes: generating a physical layer protocol data unit (physical layer protocol data unit, PPDU), where the PPDU includes a long training field (long training field, LTF), a length of a frequency-domain sequence of the LTF is greater than a first length, and the first length is a length of a frequency-domain sequence of an LTF of a PPDU transmitted over a channel whose bandwidth is 160 MHz; and sending the PPDU over a target channel, where a bandwidth of the target channel is greater than 160 MHz.

A phase rotation at a non-pilot location, a plurality of puncturing patterns for 240 MHz/320 MHz, and multiple RU combination are considered for the frequency-domain sequence of the LTF provided in this embodiment of this application, so that the finally provided frequency-domain sequence of the LTF has a small PAPR value on the multiple RU combination in the plurality of puncturing patterns for 240 MHz/320 MHz.

A second aspect provides a method for receiving a physical layer protocol data unit. The method includes: receiving a physical layer protocol data unit (physical layer protocol data unit, PPDU), where the PPDU includes a long training field (long training field, LTF), a length of a frequency-domain sequence of the LTF is greater than a first length, and the first length is a length of a frequency-domain sequence of an LTF of a PPDU transmitted over a channel whose bandwidth is 160 MHz; and parsing the PPDU.

The frequency-domain sequence of the LTF received in this embodiment of this application has a small PAPR value on multiple RU combination in a plurality of puncturing patterns for 240 MHz/320 MHz.

### BRIEF DESCRIPTION OF DRAWINGS

FIG. 1 is a schematic diagram of a communication system of a method applicable to an embodiment of this application;
FIG. 2 is a diagram of an internal structure of an access point applicable to an embodiment of this application;
FIG. 3 is a diagram of an internal structure of a station applicable to an embodiment of this application;
FIG. 4 shows an 80 MHz tone plan; and
FIG. 5 is a flowchart of a method according to an embodiment of this application.

### DESCRIPTION OF EMBODIMENTS

The following describes the technical solutions of this application with reference to the accompanying drawings.

The technical solutions of embodiments of this application may be applied to various communication systems, for example, a wireless local area network (wireless local area network, WLAN) communication system, a global system for mobile communications (global system of mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system, or new radio (new radio, NR).

For example, the following describes an application scenario in embodiments of this application and a method in embodiments of this application by using a WLAN system as an example.

Specifically, embodiments of this application may be applied to a wireless local area network (wireless local area network, WLAN), and embodiments of this application are applicable to any one of the Institute of Electrical and Electronics Engineers (institute of electrical and electronics engineers, IEEE) 802.11 series protocols currently used in the WLAN. The WLAN may include one or more basic service sets (basic service set, BSS). A network node in the basic service set includes an access point (access point, AP) and a station (station, STA).

In embodiments of this application, an initiator device may be a STA in a WLAN, and correspondingly a responder device may be an AP in the WLAN. Certainly, alternatively, an initiator device may be an AP in a WLAN, and a responder device may be a STA in the WLAN in embodiments of this application.

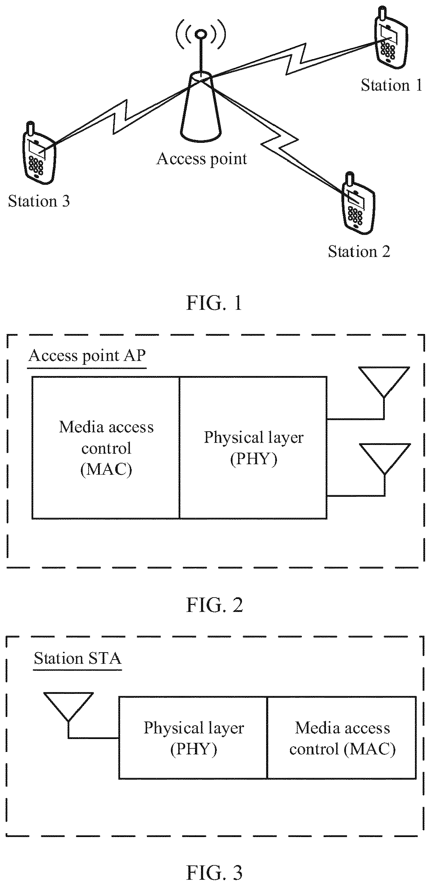

For ease of understanding embodiments of this application, a communication system shown in FIG. 1 is first used as an example to describe in detail a communication system applicable to embodiments of this application. A scenario system shown in FIG. 1 may be a WLAN system. The WLAN system in FIG. 1 may include one or more APs and one or more STAs. In FIG. 1, one AP and three STAs are used as an example. Wireless communication may be performed between the AP and the STA according to various standards. For example, wireless communication between the AP and the STA may be performed by using a single-user multiple-input multiple-output (single-user multiple-input multiple-output, SU-MIMO) technology or a multi-user multiple-input multiple-output (multi-user multiple-input multiple-output, MU-MIMO) technology.

The AP is also referred to as a wireless access point, a hotspot, or the like. The AP is an access point for a mobile user to access a wired network, and is mainly deployed in a home, a building, and a campus, or is deployed outdoors. The AP is equivalent to a bridge that connects the wired network and a wireless network. A main function of the AP is to connect wireless network clients together, and then connect the wireless network to the Ethernet. Specifically, the AP may be a terminal device or a network device with a wireless fidelity (wireless fidelity, Wi-Fi) chip. Optionally, the AP may be a device that supports a plurality of WLAN standards such as 802.11. FIG. 2 shows a diagram of an internal structure of an AP product. The AP may have a plurality of antennas or may have a single antenna. In FIG. 2, the AP includes a physical layer (physical layer, PHY) processing circuit and a media access control

(media access control, MAC) processing circuit. The physical layer processing circuit may be configured to process a physical layer signal, and the MAC layer processing circuit may be configured to process a MAC layer signal. The 802.11 standard focuses on a PHY and MAC, and embodiments of this application focus on protocol design on the MAC and the PHY.

A STA product is usually a terminal product, for example, a mobile phone, or a notebook computer, that supports the 802.11 series standards. FIG. 3 shows a diagram of a structure of a STA with a single antenna. In an actual scenario, the STA may alternatively have a plurality of antennas, and may be a device with more than two antennas. In FIG. 3, the STA may include a physical layer (physical layer, PHY) processing circuit and a media access control (media access control, MAC) processing circuit. The physical layer processing circuit may be configured to process a physical layer signal, and the MAC processing circuit may be configured to process a MAC layer signal.

The following describes embodiments of this application and content related to embodiments of this application.

The following describes some content related to embodiments of this application.

### 1. 802.11be tone plan (tone plan)

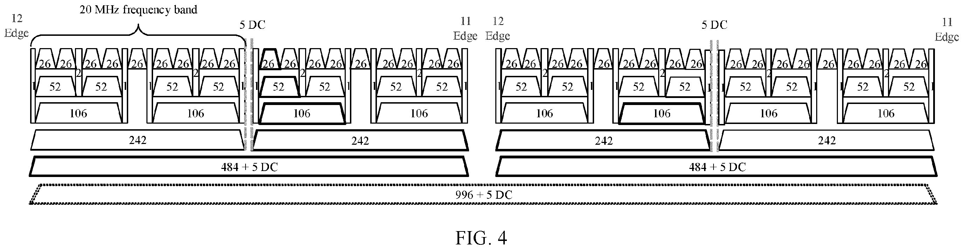

FIG. 4 shows an 802.11be 80 MHz subcarrier design. A 240 MHz bandwidth and a 320 MHz bandwidth are added to the 802.11be, where the 240 MHz is obtained by directly combining subcarriers of three 802.11be 80 MHz, and the 320 MHz is obtained by directly combining subcarriers of four 802.11be 80 MHz.

In the 80 MHz subcarrier design in FIG. 4, indices of data subcarriers and pilot subcarriers in RU26 are listed in Table 1.

**Table 1**

| | RU 1-18 | | RU 19-36 | | Pilot location |
|---|---|---|---|---|---|
| 26-tone RU | -499 | -474 | 13 | 38 | {-494 -480}, {-468 -454}, {-440 -426}, {-414 -400}, {-386 -372}, {-360 -346}, {-334 -320}, {-306 -292}, {-280 -266}, {-246 -232}, {-220 -206}, {-192 -178}, {-166 -152}, {-140 -126}, {-112 -98}, {-86 -72}, {-58 -44}, {-32 -18}, {18 32}, {44 58}, {72 86}, {98 112}, {126 140}, {152 166}, {178 192}, {206 220}, {232 246}, 5 DC, {266 280}, {292 306}, {320 334}, |
| | -473 | -448 | 39 | 64 | |
| | -445 | -420 | 67 | 92 | |
| | -419 | -394 | 93 | 118 | |
| | -392 | -367 | 120 | 145 | |
| | -365 | -340 | 147 | 172 | |
| | -339 | -314 | 173 | 198 | |
| | -311 | -286 | 201 | 226 | |
| | -285 | -260 | 227 | 252 | |
| | -252 | -227 | 260 | 285 | |
| | -226 | -201 | 286 | 311 | {346 360}, {372 386}, {400 414}, {426 440}, {454 468}, {480 494} |
| | -198 | -173 | 314 | 339 | |
| | -172 | -147 | 340 | 365 | |
| | -145 | -120 | 367 | 392 | |
| | -118 | -93 | 394 | 419 | |
| | -92 | -67 | 420 | 445 | |
| | -64 | -39 | 448 | 473 | |
| | -38 | -13 | 474 | 499 | |

It should be noted that, in Table 1, each row in the 2^{nd} column and the 3^{rd} column indicates one RU. For example, the last row in the 2^{nd} column indicates an RU 18 [-38 -13]. A location of the RU 18 is from a subcarrier numbered -38 to a subcarrier numbered -13.

It should be understood that, the following table describes same meanings, which are not repeated below.

In the 80 MHz subcarrier design in FIG. 4, indices of data subcarriers and pilot subcarriers in RU52 are listed in Table 2.

**Table 2**

| | RU 1-16 | | Pilot location |
|---|---|---|---|
| 52-tone RU | -499 | -448 | {-494, -480, -468, -454}, {M40, -426, -414, - 400}, {-360, -346, -334, -320}, {-306, -292, - 280, -266}, {-246, -232, -220, -206}, {-192, - 178, -166, -152}, {-112, -98, -86, -72}, {-58, -44, -32, -18}, {18, 32, 44, 58}, {72, 86, 98, 112}, {152, 166, 178, 192}, {206, 220, 232, 246}, {266, 280, 292, 306}, {320, 334, 346, 360}, {400, 414, 426, 440}, {454, 468, 480, 494} |
| | -445 | -394 | |
| | -365 | -314 | |
| | -311 | -260 | |
| | -252 | -201 | |
| | -198 | -147 | |
| | -118 | -67 | |
| | -64 | -13 | |
| | 13 | 64 | |
| | 67 | 118 | |
| | 147 | 198 | |
| | 201 | 252 | |
| | 260 | 311 | |
| | 314 | 365 | |
| | 394 | 445 | |
| | 448 | 499 | |

In the 80 MHz subcarrier design in FIG. 4, indices of data subcarriers and pilot subcarriers in RU106 are listed in Table 3.

**Table 3**

| | RU 1-8 | | Pilot location |
|---|---|---|---|
| 106-tone RU | -499 | -394 | {-494, -468, -426, -400}, {-360, -334, - 292, -266}, {-246, -220, -178, -152}, {-112, -86, -44, -18}, {18, 44, 86, 112}, {152, 178, 220, 246}, {266, 292, 334, 360}, {400, 426, 468, 494} |
| | -365 | -260 | |
| | -252 | -147 | |
| | -118 | -13 | |
| | 13 | 118 | |
| | 147 | 252 | |
| | 260 | 365 | |
| | 394 | 499 | |

In the 80 MHz subcarrier design in FIG. 4, indices of data subcarriers and pilot subcarriers in RU242 are listed in Table 4.

**Table 4**

| | RU 1-4 | | Pilot location |
|---|---|---|---|
| 242-tone RU | -500 | -259 | {-494, -468, -426, -400, 360, -334, -292, -266}, {-246, -220, -178, -152, 112, -86, -44, -18}, 2 null + 23 DC, {18, 44, 86, 112, 152, 178, 220, 246}, {266, 292, 334, 360, 400, 426, 468, 494} |
| | -253 | -12 | |
| | 12 | 253 | |
| | 259 | 500 | |

In the 80 MHz subcarrier design in FIG. 4, indices of data subcarriers and pilot subcarriers in RU484 are listed in Table 5.

**Table 5**

| | RU 1-2 | | Pilot location |
|---|---|---|---|
| 484-tone RU | [-500 | -259 | {-494, -468, -426, -400, 360, -334, -292, -266, 246, -220, -178, -152, 112, -86, - 44, -18}, {18, 44, 86, 112, 152, 178, 220, 246, 266, 292, 334, 360, 400, 426, 468, |
| | -253 | -12] | |
| | [12 | 253 | |
| | 259 | 500] | |

| | RU 1-2 | Pilot location | |
|---|---|---|---|
| | | 494} | |

In the 80 MHz subcarrier design in FIG. 4, indices of data subcarriers and pilot subcarriers in RU996 are listed in Table 6.

**Table 6**

| | RU 1 | Pilot location |
|---|---|---|
| 996-tone RU | [-500:-3, 3:500] | {-468 -400 -334 -266 -226 -158 -92 -24 +24 +92 +158 +226 +266 +334 +400 +468} or {-468 -400 -334 -266 -220 -152 -86 - 18 +18 +86 +152 +220 +266 +334 +400 +468} |

An LTF sequence provided in this embodiment of this application is used for the 240 MHz bandwidth and the 320 MHz bandwidth. The 240 MHz bandwidth and the 320 MHz bandwidth are constructed by using the tone plan shown in FIG. 4.

A 160 MHz bandwidth is formed by combining subcarriers of two 80 MHz shown in FIG. 4. A 240 MHz bandwidth is formed by combining subcarriers of three 80 MHz shown in FIG. 4. A 320 MHz bandwidth is formed by combining subcarriers of four 80 MHz shown in FIG. 4.

For example, a subcarrier design of the 160 MHz bandwidth is based on two 80 MHz, where [RU subcarrier indices and pilot location subcarrier indices in 80 MHz] -521:80 MHz [RU subcarrier indices and pilot location subcarrier indices in 80 MHz] +521. The 240 MHz bandwidth is based on three 80 MHz. A subcarrier design of the 320 MHz bandwidth is based on two 160 MHz, where [pilot indices in 160 MHz] -1024: [pilot indices in 160 MHz] +1024.

### 2. Puncturing patterns for 240 MHz and puncturing patterns for 320 MHz

A bitmap indicates a puncturing pattern. Each bit indicates whether one 20 MHz is punctured. For example, "0" indicates that the 20 MHz corresponding to the bit is punctured, and "1" indicates that the 20 MHz corresponding to the bit is not punctured. Optionally, bits from left to right sequentially correspond to 20 MHz with channel frequencies from low to high.

### 2-1. Puncturing patterns for 240 MHz

Pattern 1: [1 1 1 1 1 1 1 1 1 1 1 1], corresponding to a channel bandwidth of 240 MHz and 3072 subcarriers.

Pattern 2: [0 0 1 1 1 1 1 1 1 1 1 1], corresponding to an available channel bandwidth of 200 MHz.

Pattern 3: [1 1 0 0 1 1 1 1 1 1 1 1], corresponding to an available channel bandwidth of 200 MHz.

Pattern 4: [11 1 1 0 0 1 1 1 1 1 1], corresponding to an available channel bandwidth of 200 MHz.

Pattern 5: [11 1 1 1 100 1 1 1 1], corresponding to an available channel bandwidth of 200 MHz.

Pattern 6: [11 1 1 1 1 1 1 0 0 1 1], corresponding to an available channel bandwidth of 200 MHz.

Pattern 7: [11 1 1 1 1 1 1 1 10 0], corresponding to an available channel bandwidth of 200 MHz.

Pattern 8: [0 0 0 0 1 1 1 1 1 1 1 1], corresponding to an available channel bandwidth of 160 MHz.

Pattern 9: [1 1 1 10 0 0 0 1 1 1 1], corresponding to an available channel bandwidth of 160 MHz.

Pattern 10: [1 1 1 1 1 1 1 1 0 0 0 0], corresponding to an available channel bandwidth of 160 MHz.

### 2-2. Puncturing patterns for 320 MHz

Specifically, the channel puncturing patterns for 320 MHz may be classified into two types: One type is compatible with 240 MHz puncturing, and the other type is not compatible with 240 MHz puncturing. "Compatible" means: After 240 MHz is formed by channel puncturing on 320 MHz, puncturing is further performed based on the 240 MHz formed by puncturing. In other words, puncturing is continued on the 240 MHz formed by puncturing.
A. The 320 MHz channel bandwidth is compatible with 240 MHz channel puncturing.

Pattern 1: [11 1 1 1 1 1 1 1 1 1 1 1 1 1 1], corresponding to a channel bandwidth of 320 MHz and 4096 subcarriers.

Pattern 2: [0 0 1 1 1 1 1 1 1 1 1 1 1 1 1 1], corresponding to an available channel bandwidth of 280 MHz.

Pattern 3: [1 1 0 0 1 1 1 1 1 1 1 1 1 11 1], corresponding to an available channel bandwidth of 280 MHz.

Pattern 4: [11 1 1 0 0 1 1 1 1 1 1 1 11 1], corresponding to an available channel bandwidth of 280 MHz.

Pattern 5: [11 1 1 1 10 0 1 1 1 1 1 11 1], corresponding to an available channel bandwidth of 280 MHz.

Pattern 6: [11 1 1 11 1 1001 1 1 11 1], corresponding to an available channel bandwidth of 280 MHz.

Pattern 7: [11 1 1 1 1 1 1 1 10 0 1 11 1], corresponding to an available channel bandwidth of 280 MHz.

Pattern 8: [11 1 1 1 1 1 1 1 1 1 1 0 0 1 1], corresponding to an available channel bandwidth of 280 MHz.

Pattern 9: [11 1 1 11 1 1 1 1 1 1 1 1 0 0], corresponding to an available channel bandwidth of 280 MHz.

Pattern 10: [1 1 1 1 0 0 0 0 1 1 1 1 1 1 1 1], corresponding to an available channel bandwidth of 240 MHz.

Pattern 11: [1 1 1 1 1 1 1 1 0 0 0 0 1 1 1 1], corresponding to an available channel bandwidth of 240 MHz.

Pattern 12: [1 1 1 1 1 1 1 1 1 1 1 1 0 0 0 0], corresponding to an available channel bandwidth of 240 MHz.

Pattern 13: [0 0 0 0 1 1 1 1 1 1 1 1 1 1 1 1], corresponding to an available channel bandwidth of 240 MHz.

Puncturing is further performed based on the available channel bandwidth of 240 MHz formed in pattern 10 to obtain pattern 14 to pattern 22.

Pattern 14: [0 0 1 1 0 0 0 0 1 1 1 1 1 1 1 1], corresponding to an available channel bandwidth of 200 MHz.

Pattern 15: [1 1 0 0 0 0 0 0 1 1 1 1 1 1 1 1], corresponding to an available channel bandwidth of 200 MHz.

Pattern 16: [1 1 1 1 0 0 0 0 0 0 1 1 1 1 1 1], corresponding to an available channel bandwidth of 200 MHz.

Pattern 17: [1 1 1 1 0 0 0 0 1 1 0 0 1 1 1 1], corresponding to an available channel bandwidth of 200 MHz.

Pattern 18: [1 1 1 1 0 0 0 0 1 1 1 1 0 0 1 1], corresponding to an available channel bandwidth of 200 MHz.

Pattern 19: [1 1 1 1 0 0 0 0 1 1 1 1 1 1 0 0], corresponding to an available channel bandwidth of 200 MHz.

Pattern 20: [0 0 0 0 0 0 0 0 1 1 1 1 1 1 1 1], corresponding to an available channel bandwidth of 160 MHz.

Pattern 21: [1 1 1 1 0 0 0 0 0 0 0 0 1 1 1 1], corresponding to an available channel bandwidth of 160 MHz.

Pattern 22: [1 1 1 1 0 0 0 0 1 1 1 1 0 0 0 0], corresponding to an available channel bandwidth of 160 MHz.

Puncturing is further performed based on the available channel bandwidth of 240 MHz formed in pattern 11 to obtain pattern 23 to pattern 31.

Pattern 23: [0 0 1 1 1 1 1 1 0 0 0 0 1 1 1 1], corresponding to an available channel bandwidth of 200 MHz.

Pattern 24: [1 1 0 0 1 1 1 1 0 0 0 0 1 1 1 1], corresponding to an available channel bandwidth of 200 MHz.

Pattern 25: [1 1 1 1 0 0 1 1 0 0 0 0 1 1 1 1], corresponding to an available channel bandwidth of 200 MHz.

Pattern 26: [1 1 1 1 1 1 0 0 0 0 0 0 1 1 1 1], corresponding to an available channel bandwidth of 200 MHz.

Pattern 27: [1 1 1 1 1 1 1 1 0 0 0 0 0 0 1 1], corresponding to an available channel bandwidth of 200 MHz.

Pattern 28: [1 1 1 1 1 1 1 1 0 0 0 0 1 1 0 0], corresponding to an available channel bandwidth of 200 MHz.

Pattern 29: [0 0 0 0 1 1 1 1 0 0 0 0 1 1 1 1], corresponding to an available channel bandwidth of 160 MHz.

Pattern 30: [1 1 1 1 0 0 0 0 0 0 0 0 1 1 1 1], corresponding to an available channel bandwidth of 160 MHz.

Pattern 31: [1 1 1 1 1 1 1 1 0 0 0 0 0 0 0 0], corresponding to an available channel bandwidth of 160 MHz.

Puncturing is further performed based on the available channel bandwidth of 240 MHz formed in pattern 12 to obtain pattern 32 to pattern 40.

Pattern 32: [0 0 1 1 1 1 1 1 1 1 1 1 0 0 0 0], corresponding to an available channel bandwidth of 200 MHz.

Pattern 33: [1 1 0 0 1 1 1 1 1 1 1 1 0 0 0 0], corresponding to an available channel bandwidth of 200 MHz.

Pattern 34: [1 1 1 1 0 0 1 1 1 1 1 1 0 0 0 0], corresponding to an available channel bandwidth of 200 MHz.

Pattern 35: [1 1 1 1 1 100 1 1 1 1 0 0 0 0], corresponding to an available channel bandwidth of 200 MHz.

Pattern 36: [1 1 1 1 1 1 1 1 0 0 1 1 0 0 0 0], corresponding to an available channel bandwidth of 200 MHz.

Pattern 37: [1 1 1 1 1 1 1 1 1 1 0 0 0 0 0 0], corresponding to an available channel bandwidth of 200 MHz.

Pattern 38: [0 0 0 0 1 1 1 1 1 1 1 1 0 0 0 0], corresponding to an available channel bandwidth of 160 MHz.

Pattern 39: [1 1 1 1 0 0 0 0 1 1 1 1 0 0 0 0], corresponding to an available channel bandwidth of 160 MHz.

Pattern 40: [1 1 1 1 1 1 1 1 0 0 0 0 0 0 0 0], corresponding to an available channel bandwidth of 160 MHz.

Puncturing is further performed based on the available channel bandwidth of 240 MHz formed in pattern 13 to obtain pattern 32 to pattern 40.

Pattern 41: [0 0 0 0 0 0 1 1 1 1 1 1 1 1 1 1], corresponding to an available channel bandwidth of 200 MHz.

Pattern 42: [0 0 0 0 1 1 0 0 1 1 1 1 1 1 1 1], corresponding to an available channel bandwidth of 200 MHz.

Pattern 43: [0 0 0 0 1 1 1 10 0 1 1 1 1 1 1], corresponding to an available channel bandwidth of 200 MHz.

Pattern 44: [0 0 0 0 1 1 1 1 1 1 0 0 1 1 1 1], corresponding to an available channel bandwidth of 200 MHz.

Pattern 45: [0 0 0 0 1 1 1 1 1 1 1 1 0 0 1 1], corresponding to an available channel bandwidth of 200 MHz.

Pattern 46: [0 0 0 0 1 1 1 1 1 1 1 1 1 1 0 0], corresponding to an available channel bandwidth of 200 MHz.

Pattern 47: [0 0 0 0 0 0 0 0 1 1 1 1 1 1 1 1], corresponding to an available channel bandwidth of 160 MHz.

Pattern 48: [0 0 0 0 1 1 1 1 0 0 0 0 1 1 1 1], corresponding to an available channel bandwidth of 160 MHz.

Pattern 49: [0 0 0 0 1 1 1 1 1 1 1 1 0 0 0 0], corresponding to an available channel bandwidth of 160 MHz.

B. The 320 MHz channel bandwidth is incompatible with 240 MHz channel puncturing.

Pattern 1: 320 MHz [1 1 1 1 1 1 1111111111], corresponding to a channel bandwidth of 320 MHz and 4096 subcarriers.

Pattern 2: 280 MHz [0 0 1 1 1 1 1 1 1 1 1 1 1 1 1 1], corresponding to an available channel bandwidth of 280 MHz.

Pattern 3: 280 MHz [1 100 1 1 1 1 1 1 1 1 1 1 1 1], corresponding to an available channel bandwidth of 280 MHz.

Pattern 4: 280 MHz [1 1 1 100 1 1 1 1 1 1 1 1 1 1], corresponding to an available channel bandwidth of 280 MHz.

Pattern 5: 280 MHz [1 1 1 1 1 10 0 11 1 1 1 1 11], corresponding to an available channel bandwidth of 280 MHz.

Pattern 6: 280 MHz [1 1 1 1 1 1 1 100 1 1 1 1 1 1], corresponding to an available channel bandwidth of 280 MHz.

Pattern 7: 280 MHz [1 1 1 1 1 1 1 1 1 1 0 0 1 1 1 1], corresponding to an available channel bandwidth of 280 MHz.

Pattern 8: 280 MHz [1 1 1 1 1 1 1 1 1 1 1 100 1 1], corresponding to an available channel bandwidth of 280 MHz.

Pattern 9: 280 MHz [1 1 1 1 1 1 1 1 1 1 1 1 1 1 0 0], corresponding to an available channel bandwidth of 280 MHz.

Pattern 10: 240 MHz [1 1 1 10 0 0 0 1 1 1 1 1 1 1 1], corresponding to an available channel bandwidth of 240 MHz.

Pattern 11: 240 MHz [1 1 1 1 1 1 1 1 0 0 0 0 1 1 1 1], corresponding to an available channel bandwidth of 240 MHz.

Pattern 12: 240 MHz [1 1 1 1 1 1 1 1 1 1 1 1 0 0 0 0], corresponding to an available channel bandwidth of 240 MHz.

Pattern 13: 240 MHz [0 0 0 0 1 1 1 1 1 1 1 1 1 1 1 1], corresponding to an available channel bandwidth of 240 MHz.

### 3. Multiple RU combination for 240 MHz and 320 MHz

### 3-1. Multiple RU combination for 240 MHz includes:

RU26, RU52, RU26+RU52, RU106, RU26+RU106, RU242, RU484, RU242+RU484, RU996, RU484+RU996, RU242+RU484+RU996, RU484+2^{∗}RU996, and 3*RU996.

### 3-2. Multiple RU combination for 320 MHz includes:

RU26, RU52, RU26+RU52, RU106, RU26+RU106, RU242, RU484, RU242+RU484, RU996, RU484+RU996, RU242+RU484+RU996, RU484+2^{∗}RU996, 3^{∗}RU996, 3^{∗}RU996+RU484, and 4^{∗}RU996.

Specifically and feasibly, a pattern considered for the 240 MHz bandwidth of the 1x LTF may be 2-1, and a pattern considered for the 320 MHz bandwidth of the 1x LTF may be 2-2.

**Table A. 240 MHz bandwidth patterns for a 2x LTF and a 4x LTF may be:**

| *RU size* | *RU26* | *RU52* | *RU26+R U52* | *RU106* | *RU26+R U106* | *RU242* | *RU484* | *RU242+R U484* | *RU996* | *RU484+R U996* | *RU2^{∗}996* | *RU484+2 ^{∗}996* | *RU 3^{∗}996* |
|---|---|---|---|---|---|---|---|---|---|---|---|---|---|
| *Options* | *36^{∗}3* | *16^{∗}3* | *4^{∗}3* | *8^{∗}3* | *4^{∗}3* | *4^{∗}3* | *2^{∗}3* | *4^{∗}3* | *1^{∗}3* | *8* | *3* | *6* | *1* |

**Table B. 320 MHz bandwidth patterns for a 2x LTF and a 4x LTF may be:**

| *RU size* | *RU26* | *RU52* | ***RU26+R U52*** | ***RU106*** | ***RU26+R U106*** | ***R17242*** | ***RU484*** | ***RU242+R U484*** | *RU996* | *RU484+R U996* | *RU2*9 96* | *RU484+2*99 6* | *RU 3*996* | *RU3*996+R U484* | *RU 4*996* |
|---|---|---|---|---|---|---|---|---|---|---|---|---|---|---|---|
| *Options* | *36*4* | *16*4* | *4*4* | *8*4* | *4*4* | *4*4* | *2*4* | *4*4* | *1*4* | *4*2* | *2* | *Not considered or 24* | *4* | *8* | *1* |
| *Options (Considering 240 MHz)* | *36*4* | *16*4* | *4*4* | *8*4* | *4*4* | *4*4* | *2*4* | *4*4* | *1*4* | *4*2* | *3 *4* | *4*6* | *4* | *8* | *1* |

This embodiment of this application provides a plurality of possible LTF sequences. Some LTF sequences each have a smallest PAPR value in a full bandwidth. Some LTF sequences have a smallest maximum PAPR (in a full bandwidth and a plurality of puncturing patterns), and therefore have optimal comprehensive performance in the full bandwidth and the plurality of puncturing patterns. A PAPR in a full bandwidth, a plurality of puncturing patterns, and multiple RUs are comprehensively considered for some LTF sequences, and therefore the LTF sequences have optimal comprehensive performance in the full bandwidth, the plurality of puncturing patterns, and the multiple RUs.

4. After the content related to embodiments of this application is described, the following describes details of embodiments of this application.

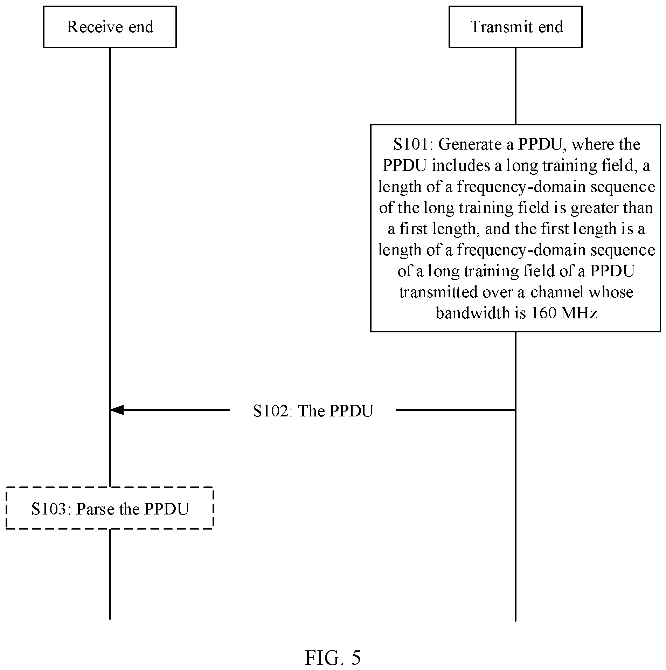

As shown in FIG. 5, an embodiment of this application provides a method for transmitting a physical layer protocol data unit. The method includes the following steps.

S101: Generate a physical layer protocol data unit (physical layer protocol data unit, PPDU), where the PPDU includes a long training field (long training field, LTF), a length of a frequency-domain sequence of the LTF is greater than a first length, and the first length is a length of a frequency-domain sequence of an LTF of a PPDU transmitted over a channel whose bandwidth is 160 MHz.

S102: Send the PPDU over a target channel, where a bandwidth of the target channel is greater than 160 MHz.

This embodiment of this application focuses on frequency-domain sequences of LTFs of PPDUs transmitted over 240 MHz and 320 MHz. Therefore, the foregoing steps may be simplified as follows:
S201: Generate a PPDU, where the PPDU is transmitted over a channel whose bandwidth is 240 MHz/320 MHz, the PPDU includes an LTF, and a frequency-domain sequence of the LTF is any one of a plurality of possible LTF frequency-domain sequences provided below.
S202: Send the PPDU over a channel whose bandwidth is 240 MHz/320 MHz.

This embodiment of this application focuses on a plurality of possible frequency-domain sequences of LTFs (a frequency-domain sequence of an LTF is referred to as an LTF sequence for short in this specification). Before the plurality of possible LTF sequences provided in this embodiment of this application are described, **a method for constructing an LTF sequence is first described.** The method specifically includes:
i: Determine a sequence structure of the LTF sequence.
ii: Determine the LTF sequence through computer search based on the following design criteria. The design criteria includes:
   (1) A small PAPR needs to be considered to lower a requirement for a linear power amplifier.
   (2) A phase rotation at a non-pilot location needs to be considered: A plurality of streams are considered (a size of a P matrix is 2x2, 4x4, 6x6, 8x8, 12x12, or 16x16).
   (3) A plurality of puncturing patterns need to be considered.
   (4) Multiple RU combination needs to be considered (multiple RUs are allocated to a same STA).

### The following describes a plurality of possible LTF sequences provided in this embodiment of this application.

Note: The following x represents 0, and indicates being punctured.

### 1. 1x LTF sequence in the 240 MHz bandwidth (referred to as an LTF1x240M sequence for short)

1-1. A possible LTF1x240M sequence = [LTF1x80M 0₂₃ LTF1x80M 0₂₃ -LTF1x80M]. LTF1x80M is an 80 MHz 1x LTF sequence in the 802. 11ax standard. For a specific sequence, refer to the 802. 11ax standard.

When fast Fourier transform IFFTsize is 3072, the LTF1×240M sequence has a small PAPR value in various puncturing patterns for 240 MHz (full bandwidth 240 MHz and the foregoing various punctured 240 MHz). In other words, in the full bandwidth 240 MHz and the foregoing various punctured 240 MHz, the LTF1×240M sequence has optimal comprehensive performance.

Specifically, when the fast Fourier transform IFFTsize is 3072, PAPR values of the LTF1x240M sequence in various puncturing patterns (pattern 1 to pattern 10) for 240 MHz may be obtained from the following Table 7.

**Table 7**

| Sequence: | PAPR [dB] |
|---|---|
| **LTF1x240M = [LTF1x80M 0₂₃ LTF1x80M 0₂₃ - LTF1x80M]** | |
| Pattern 1: 240 MHz [1111 111 11111] | 7.2207 |
| Pattern 2: 200 MHz [x x 1 1 1 1 1 1 1 1 1 1] | 7.8789 |
| Pattern 3: 200 MHz [1 1 x x 1 1 1 1 1 1 1 1] | 7.0817 |
| Pattern 4: 200 MHz [1 1 1 1 x x 1 1 1 1 1 1] | 8.2302 |
| Pattern 5: 200 MHz [1 1 1 1 1 1 x x 1 1 1 1] | 8.3342 |
| Pattern 6: 200 MHz [1 1 1 1 1 1 1 1 x x 1 1] | 7.709 |
| Pattern 7: 200 MHz [1 1 1 1 1 1 1 1 1 1 x x] | 6.976 |
| Pattern 8: 160 MHz [x x x x 1 1 1 1 1 1 1 1] | 8.0061 |
| Pattern 9: 160 MHz [1 1 1 1 x x x x 1 1 1 1] | 8.0125 |
| Pattern 10: 160 MHz [1 1 1 1 1 1 1 1 x x x x] | 7.6934 |
| Pattern 5 has a largest comprehensive PAPR value. | 8.3342 |

It may be learned that PAPR values of the LTF1x240M sequence in the foregoing 10 puncturing patterns are all small. The PAPR value of the LTF1x240M sequence in pattern 5 is the largest, and the largest PAPR value is 8.3342. In other puncturing patterns, PAPR values of the LTF1x240M sequence are all less than 8.3342.

In other words, the foregoing provided LTF1x240M sequence has a smallest PAPR value if full bandwidth, various puncturing patterns, and multiple streams are considered. In different puncturing patterns, an LTF1x240M sequence = [LTF1x80M 0₂₃ LTF1x80M 0₂₃ LTF1x80M], an LTF1x240M sequence = [LTF1x80M 0₂₃ -LTF1x80M 0₂₃ LTF1x80M], or an LTF1x240M sequence = [LTF1x80M 0₂₃ -LTF1x80M 0₂₃ -LTF1x80M] may alternatively be selected.

When the fast Fourier transform IFFTsize is 4096, the LTF1x240M sequence also has a small PAPR value in various puncturing patterns for 240 MHz (full bandwidth 240 MHz and the foregoing various punctured 240 MHz). In other words, when the fast Fourier transform IFFTsize is 4096, in the full bandwidth 240 MHz and the foregoing various punctured 240 MHz, the LTF1x240M sequence has optimal comprehensive performance.

Specifically, when the fast Fourier transform IFFTsize is 4096, PAPR values of the LTF1x240M sequence in various puncturing patterns (pattern 1 to pattern 10) for 240 MHz may be obtained from the following Table 8.

**Table 8**

| Sequence: | PAPR [dB] |
|---|---|
| **LTF1x240M = [LTF1x80M 0₂₃ LTF1x80M 0₂₃ - LTF1x80M]** | |
| Pattern 1: 240 MHz [1 1 1 1 1 1 1 1 1 1 1 1] | 7.2207 |
| Pattern 2: 200 MHz [x x 1 1 1 1 1 1 1 1 1 1] | 7.9233 |
| Pattern 3: 200 MHz [1 1 x x 1 1 1 1 1 1 1 1] | 7.17 |
| Pattern 4: 200 MHz [1 1 1 1 x x 1 1 1 1 1 1] | 8.2302 |
| Pattern 5: 200 MHz [1 1 1 1 1 1 x x 1 1 1 1] | 8.3342 |
| Pattern 6: 200 MHz [1 1 1 1 1 1 1 1 x x 1 1] | 7.835 |
| Pattern 7: 200 MHz [1 1 1 1 1 1 1 1 1 1 x x] | 7.004 |
| Pattern 8: 160 MHz [x x x x 1 1 1 1 1 1 1 1] | 8.0061 |
| Pattern 9: 160 MHz [1 1 1 1 x x x x 1 1 1 1] | 8.0125 |
| Pattern 10: 160 MHz [1 1 1 1 1 1 1 1 x x x x] | 7.7473 |
| Pattern 5 has a largest comprehensive PAPR value. | 8.3342 |

It may be learned that PAPR values of the LTF1x240M sequence in the foregoing 10 puncturing patterns are all small. The PAPR value of the LTF1x240M sequence in pattern 5 is the largest, and the largest PAPR value is 8.3342. In other puncturing patterns, PAPR values of the LTF1x240M sequence are all less than 8.3342.

A method for obtaining the foregoing 1-1 LTF1x240M sequence includes:
i: determining a sequence structure of the LTF1x240M sequence, where the sequence structure of the LTF1x240M sequence is [LTF1x80M 0₂₃ ± LTF1x80M 0₂₃ ± LTF1x80M]; and
ii: determining the LTF1x240M sequence = [LTF1x80M 0₂₃ LTF1x80M 0₂₃ -LTF1x80M] through computer search based on the following design criterion mentioned above.

In other words, if full bandwidth, various puncturing patterns, and multiple streams are considered, the PAPR value of the LTF1x240M sequence provided above is the smallest.

Certainly, it should be understood that, in different puncturing patterns, the LTF1x240M sequence = [LTF1x80M 0₂₃ LTF1x80M 0₂₃ LTF1x80M], the LTF1x240M sequence = [LTF1x80M 0₂₃ -LTF1x80M 0₂₃ LTF1x80M], or the LTF1x240M sequence = [LTF1x80M 0₂₃ -LTF1x80M 0₂₃ -LTF1x80M] may alternatively be selected.

1-2. A possible LTF1x240M sequence = [LTF1x160M 0₂₃ -LTF1x80M]. LTF1x160M is a 160 MHz 1xLTF sequence in the 802.11ax standard. For a specific sequence, refer to the 802.11ax standard. LTF1x80M is an 80 MHz 1x LTF sequence in the 802.11ax standard. For a specific sequence, refer to the 802.11ax standard.

When fast Fourier transform IFFTsize is 3072 or 4096, a PAPR value of the LTF1x240M sequence in full bandwidth 240 MHz is 7.2646, and is a small PAPR value.

1-3. A possible LTF1x240M sequence = [LTF1x160M 0₂₃ -LTF1x80M]. LTF1x160M is a 160 MHz 1xLTF sequence in the 802.11ax standard. For a specific sequence, refer to the 802.11ax standard. LTF1x80M is an 80 MHz 1x LTF sequence in the 802.11ax standard. For a specific sequence, refer to the 802.11ax standard.

When fast Fourier transform IFFTsize is 3072 or 4096, the LTF1x240M sequence has a small PAPR value in various puncturing patterns for 240 MHz (full bandwidth 240 MHz and the foregoing various punctured 240 MHz). In other words, in the full bandwidth 240 MHz and the foregoing various punctured 240 MHz, the LTF1x240M sequence has optimal comprehensive performance.

Specifically, when the fast Fourier transform IFFTsize is 3072, PAPR values of the LTF1x240M sequence in various puncturing patterns (pattern 1 to pattern 10) for 240 MHz may be obtained from the following Table 9.

**Table 9**

| Sequence: | PAPR [dB] |
|---|---|
| **LTF1x240M = [LTF1x160M 0₂₃ - LTF1x80M]** | |
| Pattern 1: 240 MHz [1 1 1 1 1 1 1 1 1 1 1 1] | 7.4246 |
| Pattern 2: 200 MHz [x x 1 1 1 1 1 1 1 1 1 1] | ! 7.1027 |
| Pattern 3: 200 MHz [1 1 x x 1 1 1 1 1 1 1 1] | 7.5513 |
| Pattern 4: 200 MHz [1 1 1 1 x x 1 1 1 1 1 1] | 8.8806 |
| Pattern 5: 200 MHz [1 1 1 1 1 1 x x 1 1 1 1] | 8.3342 |
| Pattern 6: 200 MHz [1 1 1 1 1 1 1 1 x x 1 1] | 6.5793 |
| Pattern 7: 200 MHz [1 1 1 1 1 1 1 1 1 1 x x] | 7.7152 |
| Pattern 8: 160 MHz [x x x x 1 1 1 1 1 1 1 1] | 5.4536 |
| Pattern 9: 160 MHz [1 1 1 1 x x x x 1 1 1 1] | 8.0125 |
| Pattern 10: 160 MHz [1 1 1 1 1 1 1 1 x x x x] | 5.1227 |
| Pattern 4 has a largest comprehensive PAPR value. | 8.8806 |

It may be learned that PAPR values of the LTF1x240M sequence in the foregoing 10 puncturing patterns are all small. The PAPR value of the LTF1x240M sequence in pattern 4 is the largest, and the largest PAPR value is 8.8806. In other puncturing patterns, PAPR values of the LTF1x240M sequence are all less than 8.8806.

Specifically, when the fast Fourier transform IFFTsize is 4096, PAPR values of the LTF1x240M sequence in various puncturing patterns (pattern 1 to pattern 10) for 240 MHz may be obtained from the following Table 10.

**Table 10**

| Sequence: | PAPR [dB] |
|---|---|
| **LTF1x240M = [LTF1x160M 0₂₃ - LTF1x80M]** | |
| Pattern 1: 240 MHz [1 1 1 1 111 1 1 1 1 1] | 7.4246 |
| Pattern 2: 200 MHz [x x 1 1 1 1 1 1 1 1 1 1] | 7.0835 |
| Pattern 3: 200 MHz [1 1 x x 1 1 1 1 1 1 1 1] | 7.4566 |
| Pattern 4: 200 MHz [1 1 1 1 x x 1 1 1 1 1 1] | 8.8806 |
| Pattern 5: 200 MHz [1 1 1 1 1 1 x x 1 1 1 1] | 8.3342 |
| Pattern 6: 200 MHz [1 1 1 1 1 1 1 1 x x 1 1] | 6.4575 |
| Pattern 7: 200 MHz [1 1 1 1 1 1 1 1 1 1 x x] | 7.7341 |
| Pattern 8: 160 MHz [x x x x 1 1 1 1 1 1 1 1] | 5.4339 |
| Pattern 9: 160 MHz [1 1 1 1 x x x x 1 1 1 1] | 8.0125 |
| Pattern 10: 160 MHz [1 1 1 1 1 1 1 1 x x x x] | 5.1934 |
| Pattern 4 has a largest comprehensive PAPR value. | 8.8806 |

It may be learned that PAPR values of the LTF1x240M sequence in the foregoing 10 puncturing patterns are all small. The PAPR value of the LTF1x240M sequence in pattern 4 is the largest, and the largest PAPR value is 8.8806. In other puncturing patterns, PAPR values of the LTF1x240M sequence are all less than 8.8806.

1-4. Apossible LTF1x240M sequence = [LTF1x80MHz_{left} 0 LTF1x80MHz_{right} 0₂₃ -LTF1x80MHz_{left} 0 - LTF1x80MHz_{right} 0₂₃ LTF1x80MHz_{left} 0 -LTF1x80MHz_{right]}. LTF1x80 MHz_{left} is an 80 NMz_{left} 1x LTF sequence in the 802.11ax standard. For a specific sequence, refer to the 802. 11ax standard. LTF1x80 NMz_{right} is an 80 NMz_{right} 1x LTF sequence in the 802.11ax standard. For a specific sequence, refer to the 802.11ax standard.

When the fast Fourier transform IFFTsize is 3072 or 4096, a PAPR value of the LTF1x240M sequence in full bandwidth 240 MHz is 6.8006, and is a small PAPR value.

1-5. A possible LTF1x240M sequence = [LTF1x80MHz_{left} 0 LTF1x80MHz_{right} 0₂₃ -LTF1x80MHz_{left} 0 LTF1x80MHz_{right} 0₂₃ -LTF1x80MHz_{left} 0 -LTF1x80MHz_{right]}. LTF1x80 MHz_{left} is an 80 MHz_{left} 1x LTF sequence in the 802.11ax standard. For a specific sequence, refer to the 802. 11ax standard. LTF1x80 NMz_{right} is an 80 NMz_{right} 1x LTF sequence in the 802.11ax standard. For a specific sequence, refer to the 802.11ax standard.

When fast Fourier transform IFFTsize is 3072 or 4096, the LTF1x240M sequence has a small PAPR value in various puncturing patterns for 240 MHz (full bandwidth 240 MHz and the foregoing various punctured 240 MHz). In other words, when the fast Fourier transform IFFTsize is 3072 or 4096, in the full bandwidth 240 MHz and the foregoing various punctured 240 MHz, the LTF1x240M sequence has optimal comprehensive performance.

Specifically, when the fast Fourier transform IFFTsize is 3072, PAPR values of the LTF1x240M sequence in various puncturing patterns (pattern 1 to pattern 10) for 240 MHz may be obtained from the following Table 11.

**Table 11**

| Sequence: LTF1x240M= [LTF1x80MHz_{left} 0 LTF1x80MHz_{right} O₂₃ -LTF1x80MHz_{left} 0 LTF1x80MHz_{right} 0₂₃ - LTF1x80MHz_{left} 0 -LTF1x80MHz_{right}] | PAPR [dB] |
|---|---|
| Pattern 1: 240 MHz [1 1 1 1 1 1 1 1 1 1 1 1] | 7.3778 |
| Pattern 2: 200 MHz [x x 1 1 1 1 1 1 1 1 1 1] | 6.6954 |
| Pattern 3: 200 MHz [1 1 x x 1 1 1 1 1 1 1 1] | 7.2822 |
| Pattern 4: 200 MHz [1 1 1 1 x x 1 1 1 1 1 1] | 8.2302 |
| Pattern 5: 200 MHz [1 1 1 1 1 1 x x 1 1 1 1] | 8.0139 |
| Pattern 6: 200 MHz [1 1 1 1 1 1 1 1 x x 1 1] | 7.0094 |
| Pattern 7: 200 MHz [1 1 1 1 1 1 1 1 1 1 x x] | 7.0232 |
| Pattern 8: 160 MHz [x x x x 1 1 1 1 1 1 1 1] | 5.1437 |
| Pattern 9: 160 MHz [1 1 1 1 x x x x 1 1 1 1] | 8.0125 |
| Pattern 10: 160 MHz [1 1 1 1 1 1 1 1 x x x x] | 5.3607 |
| Pattern 4 has a largest comprehensive PAPR value. | 8.2302 |

It may be learned that PAPR values of the LTF1x240M sequence in the foregoing 10 puncturing patterns are all small. The PAPR value of the LTF1x240M sequence in pattern 4 is the largest, and the largest PAPR value is 8.2303. In other puncturing patterns, PAPR values of the LTF1x240M sequence are all less than 8.2303.

Specifically, when the fast Fourier transform IFFTsize is 4096, PAPR values of the LTF1x240M sequence in various puncturing patterns (pattern 1 to pattern 10) for 240 MHz may be obtained from the following Table 12.

**Table 12**

| Sequence: LTF1x240M= [LTF1x80MHz_{left} 0 LTF1x80MHz_{right} 0₂₃-LTF1x80MHz_{left} 0 LTF1x80MHz_{right} 0₂₃ - LTF1x80MHz_{left} 0 -LTF1x80MHz_{right}] | PAPR [dB] |
|---|---|
| Pattern 1: 240 MHz [1 1 1 1 111 11111] | 7.3778 |
| Pattern 2: 200 MHz [x x 1 1 1 1 1 1 1 1 1 1] | 6.825 |
| Pattern 3: 200 MHz [1 1 x x 1 1 1 1 1 1 1 1] | 7.4829 |
| Pattern 4: 200 MHz [1 1 1 1 x x 1 1 1 1 1 1] | 8.2302 |
| Pattern 5: 200 MHz [1 1 1 1 1 1 x x 1 1 1 1] | 8.0139 |
| Pattern 6: 200 MHz [1 1 1 1 1 1 1 1 x x 1 1] | 7.048 |
| Pattern 7: 200 MHz [1 1 1 1 1 1 1 1 1 1 x x] | 7.1244 |
| Pattern 8: 160 MHz [x x x x 1 1 1 1 1 1 1 1] | 5.1417 |
| Pattern 9: 160 MHz [1 1 1 1 x x x x 1 1 1 1] | 8.0125 |
| Pattern 10: 160 MHz [1 1 1 1 1 1 1 1 x x x x] | 5.4239 |
| Pattern 4 has a largest comprehensive PAPR value. | 8.2302 |

It may be learned that PAPR values of the LTF1x240M sequence in the foregoing 10 puncturing patterns are all small. The PAPR value of the LTF1x240M sequence in pattern 4 is the largest in the 10 puncturing patterns, and the largest PAPR value is 8.2303. In other puncturing patterns, PAPR values of the LTF1x240M sequence are all less than 8.2303.

### 2. 1x LTF sequence in the 320 MHz bandwidth (referred to as an LTF1x320M sequence for short)

2-1. Apossible LTF1x320M sequence = [LTF1x80M 0₂₃ -LTF1x80M 0₂₃-LTF1x80M 0₂₃ LTF1x80M]. LTF1x80M is an 80 MHz 1x LTF sequence in the 802.11ax standard. For a specific sequence, refer to the 802.11ax standard.

The LTF1x320M sequence has a small PAPR value in various puncturing patterns for 320 MHz (full bandwidth 320 MHz and the foregoing various punctured 320 MHz). In other words, in the full bandwidth 320 MHz and the foregoing various punctured 320 MHz, the LTF1x320M sequence has optimal comprehensive performance.

Specifically, PAPR values of the LTF1x320M sequence in pattern 1 to pattern 13 for 320 MHz may be obtained from the following Table 13.

**Table 13**

| Sequence: LTF1x320M = [LTF1x80M0₂₃ -LTF1x80M 0₂₃ -LTF1x80M 0₂₃ LTF1x80M] | PAPR [dB] |
|---|---|
| Pattern 1: 320 MHz [1 1 1 1 1 1 1 1 1 1 1 1 1 1 1 1] | 8.7838 |
| Pattern2: 280 MHz [x x 1 1 1 1 1 1 1 1 1 1 1 1 1 1] | 8.1298 |
| Pattern 3: 280 MHz [1 1 x x 1 1 1 1 1 1 1 1 1 1 1 1] | 8.2399 |
| Pattern 4: 280 MHz [1 1 1 1 x x 1 1 1 1 1 1 1 1 1 1] | 9.6228 |
| Pattern 5: 280 MHz [1 1 1 1 1 1 x x 1 1 1 1 1 1 1 1] | 9.0541 |
| Pattern 6: 280 MHz [1 1 1 1 1 1 1 1 x x 1 1 1 1 1 1] | 9.2629 |
| Pattern 7: 280 MHz [1 1 1 1 1 1 1 1 1 1 x x 1 1 1 1] | 9.1881 |
| Pattern 8: 280 MHz [1 1 1 1 1 1 1 1 1 1 1 1 x x 1 1] | 8.6965 |
| Pattern 9: 280 MHz [1 1 1 1 1 1 1 1 1 1 1 1 1 1 x x] | 8.1078 |
| Pattern 10: 240 MHz [1 1 1 1 x x x x 1 1 1 1 1 1 11] | 8.7506 |
| Pattern 11: 240 MHz [1 1 1 1 1 1 1 1 x x x x 1 1 1 1] | 8.7506 |
| Pattern 12: 240 MHz [1 1 1 1 1 1 1 1 1 1 1 1 x x x x] | 7.2207 |
| Pattern 13: 240 MHz [x x x x 1 1 1 1 1 1 1 1 1 1 1 1] | 7.2207 |
| Pattern 4 has a largest comprehensive PAPR value. | 9.6228 |

It may be learned that PAPR values of the LTF1x320M sequence in the foregoing 13 puncturing patterns are all small. The PAPR value of the LTF1x320M sequence in pattern 4 is the largest, and the largest PAPR value is 9.6228. In other puncturing patterns, PAPR values of the LTF1x320M sequence are all less than 9.6228.

Certainly, it should be understood that, in different puncturing patterns, the LTF1x320M sequence = [LTF1x80M 0₂₃ LTF1x80M 0₂₃ LTF1x80M 0₂₃ -LTF1x80M], the LTF1x320M sequence = [LTF1x80M 0₂₃ LTF1x80M 0₂₃ LTF1x80M 0₂₃ LTF1x80M], the LTF1x320M sequence = [LTF1x80M 0₂₃ -LTF1x80M 0₂₃ LTF1x80M 0₂₃ LTF1x80M], the LTF1x320M sequence = [LTF1x80M 0₂₃ -LTF1x80M 0₂₃ -LTF1x80M 0₂₃ LTF1x80M], or the LTF1x320M sequence = [LTF1x80M 0₂₃ -LTF1x80M 0₂₃ -LTF1x80M 0₂₃ -LTF1x80M] may alternatively be selected.

### 2-2. Apossible LTF1x320M sequence = [LTF1x80M 0₂₃ LTF1x80M 0₂₃

LTF1x80M 0₂₃ -LTF1x80M]. LTF1x80M is an 80 MHz 1x LTF sequence in the 802.11ax standard. For a specific sequence, refer to the 802.11ax standard.

APAPR value of the LTF1x320M sequence in full bandwidth 320 MHz is 7.4137, and is a small PAPR value.

2-3. A possible LTF1x320M sequence = [LTF1x160M 0₂₃ LTF1x160M]. LTF1x160M is a 160 MHz 1x LTF sequence in the 802.11ax standard. For a specific sequence, refer to the 802.11ax standard.

A PAPR value of the LTF1x320M sequence in full bandwidth 320 MHz is 7.8726, and is a small PAPR value.

2-4. Apossible LTF1x320M sequence = [LTF1x160M 0₂₃ -LTF1x160M]. LTF1x160M is a 160 MHz 1x LTF sequence in the 802.11ax standard. For a specific sequence, refer to the 802.11ax standard.

The LTF1x320M sequence also has a small PAPR value in pattern 1 to pattern 13 for 320 MHz (full bandwidth 320 MHz and the foregoing patterns 2 to 13 for 320 MHz). In other words, in the full bandwidth 320 MHz and the foregoing patterns 2 to 13 for 320 MHz, the LTF1x320M sequence has optimal comprehensive performance.

Specifically, PAPR values of the LTF1x320M sequence in pattern 1 to pattern 13 for 320 MHz may be obtained from the following Table 14.

**Table 14**

| Sequence: | PAPR [dB] |
|---|---|
| LTF1x320M = [LTF1x160M 0₂₃-LTF1x160M] | |
| Pattern 1: 320 MHz [1 1 1 1 1 1 1 1 1 1 1 1 1 1 1 1] | 8.1330 |
| Pattern 2: 280 MHz [x x 1 1 1 1 1 1 1 1 1 1 1 1 1 1] | 8.0204 |
| Pattern 3: 280 MHz [1 1 x x 1 1 1 1 1 1 1 1 1 1 1 1] | 8.1358 |
| Pattern 4: 280 MHz [1 1 1 1 x x 1 1 1 1 1 1 1 1 1 1] | 7.9208 |
| Pattern 5: 280 MHz [1 1 1 1 1 1 x x 1 1 1 1 1 1 1 1] | 7.8824 |
| Pattern 6: 280 MHz [1 1 1 1 1 1 1 1 x x 1 1 1 1 1 1] | 7.9528 |
| Pattern 7: 280 MHz [1 1 1 1 1 1 1 1 1 1 x x 1 1 1 1] | 8.4914 |
| Pattern 8: 280 MHz [1 1 1 1 1 1 1 1 1 1 1 1 x x 1 1] | 8.4989 |
| Pattern 9: 280 MHz [1 1 1 1 1 1 1 1 1 1 1 1 1 1 x x] | 8.1434 |
| Pattern 10: 240 MHz [1 1 1 1 x x x x 1 1 1 1 1 1 1 1] | 7.4246 |
| Pattern 11: 240 MHz [1 1 1 1 1 1 1 1 x x x x 1 1 1 1] | 7.8077 |

| LTF1x320M = [LTF1x160M 0₂₃ -LTF1x160M] | |
|---|---|
| Pattern 12: 240 MHz [1 1 1 1 1 1 1 1 1 1 1 1 x x x x] | 7.4246 |
| Pattern 13: 240 MHz [x x x x 1 1 1 1 1 1 1 1 1 1 1 1] | 7.8077 |
| Pattern 8 has a largest comprehensive PAPR value. | 8.4989 |

It may be learned that PAPR values of the LTF1x320M sequence in the foregoing 13 puncturing patterns are all small. The PAPR value of the LTF1x320M sequence in pattern 8 is the largest, and the largest PAPR value is 8.4989. In other puncturing patterns, PAPR values of the LTF1x320M sequence are all less than 8.4989.

2-5. Another possible LTF1x320M sequence = [LTF1x80MHz_{left} 0 LTF1x80MHz_{right} 0₂₃ - LTF1x80MHz_{left} 0 -LTF1x80MHz_{right} 0₂₃ LTF1x80MHz_{left} 0 -LTF1x80MHz_{right} 0₂₃ LTF1x80MHz_{left} 0 - LTF1x80MHz_{right}]. LTF1x80 MHz_{left} is an 80 MH_{Zleft} 1x LTF sequence in the 802.11ax standard. For a specific sequence, refer to the 802.11ax standard. LTF1x80 NMz_{right} is an 80 NMz_{right} 1xLTF sequence in the 802.11ax standard. For a specific sequence, refer to the 802.11ax standard.

The LTF1x320M sequence also has a small PAPR value in pattern 1 to pattern 13 for 320 MHz (full bandwidth 320 MHz and the foregoing patterns 2 to 13 for 320 MHz). In other words, in the full bandwidth 320 MHz and the foregoing patterns 2 to 13 for 320 MHz, the LTF1x320M sequence has optimal comprehensive performance.

Specifically, PAPR values of the LTF1x320M sequence in pattern 1 to pattern 13 for 320 MHz may be obtained from the following Table 15.

**Table 15**

| Sequence: LTF1x320M= [LTF1x80MHz_{left} 0 LTF1x80MHz_{right} 0₂₃ -LTF1x80MHz_{left} 0 -LTF1x80MHzn_{right} 0₂₃ LTF1x80MHz_{left} 0 -LTF1x80MHzn_{right} 0₂₃ LTF1x80MHz_{left} 0 -LTF1x80MHz_{right}] | PAPR [dB] |
|---|---|
| Pattern 1: 320 MHz [1 1 1 1 1 1 1 1 1 1 1 1 1 1 1 1] | 5.3139 |
| Pattern 2: 280 MHz [x x 1 1 1 1 1 1 1 1 1 1 1 1 1 1] | 7.347 |
| Pattern 3: 280 MHz [1 1 x x 1 1 1 1 1 1 1 1 1 1 1 1] | 7.9722 |
| Pattern 4: 280 MHz [1 1 1 1 x x 1 1 1 1 1 1 1 1 1 1] | 8.0318 |
| Pattern 5: 280 MHz [1 1 1 1 1 1 x x 1 1 1 1 1 1 1 1] | 6.4779 |
| Pattern 6: 280 MHz [1 1 1 1 1 1 1 1 x x 1 1 1 1 1 1] | 6.4081 |
| Pattern 7: 280 MHz [1 1 1 1 1 1 1 1 1 1 x x 1 1 1 1] | 7.8637 |
| Pattern 8: 280 MHz [1 1 1 1 1 1 1 1 1 1 1 1 x x 1 1] | 7.8027 |

| Sequence: LTF1x320M = [LTF1x80MHz_{left} 0 LTF1x80MHz_{right}0₂₃-LTF1x80MHz_{left} 0 -LTF1x80MHz_{right} 0₂₃ LTF1x80MHz_{left} 0 -LTF1x8ONMz_{right}0₂₃ LTF1x80MHz_{left} 0 -LTF1x80MHz_{right}] | PAPR [dB] |
|---|---|
| Pattern 9: 280 MHz [1 1 1 1 1 1 1 1 1 1 1 1 1 1 x x] | 7.4278 |
| Pattern 10: 240 MHz [1 1 1 1 x x x x 1 1 1 1 1 1 1 1] | 7.2417 |
| Pattern 11: 240 MHz [1 1 1 1 1 1 1 1 x x x x 1 1 1 1] | 7.2646 |
| Pattern 12: 240 MHz [1 1 1 1 1 1 1 1 1 1 1 1 x x x x] | 6.8006 |
| Pattern 13: 240 MHz [x x x x 1 1 1 1 1 1 1 1 1 1 1 1] | 7.0622 |
| Pattern 4 has a largest comprehensive PAPR value. | 8.0318 |

It may be learned that PAPR values of the LTF1x320M sequence in the foregoing 13 puncturing patterns are all small. The PAPR value of the LTF1x320M sequence in pattern 4 is the largest, and the largest PAPR value is 8.0318. In other puncturing patterns, PAPR values of the LTF1x320M sequence are all less than 8.0318.

2-6. A possible LTF1x320M sequence = [LTF1x80MHz_{left} 0 -LTF1x80MHz_{right} 0₂₃ LTF1x80MHz_{left} 0 LTF1x80MHz_{right} 0₂₃ -LTF1x80MHz_{left} 0 LTF1x80MHz_{right} 0₂₃ -LTF1x80MHz_{left} 0 -LTF1x80MHz_{right}]. LTF1x80 MHz_{left} is an 80 MHz_{left} 1x LTF sequence in the 802.11ax standard. For a specific sequence, refer to the 802.11ax standard. LTF1x80 NMz_{right} is an 80 NMz_{right} 1x LTF sequence in the 802.11ax standard. For a specific sequence, refer to the 802.11ax standard.

A PAPR value of the LTF1x320M sequence is 8.7263 dB in a puncturing pattern for 320 MHz other than a full bandwidth puncturing pattern. In puncturing patterns other than the full bandwidth puncturing pattern, PAPR values of the LTF1x320 MHz sequence are all less than 8.7263.

2-7. A possible LTF1x320M sequence = [LTF1x80MHz_{left} 0 LTF1x80MHz_{right} 0₂₃ LTF1x80MHz_{left} 0 - LTF1x80MHz_{right} 0₂₃ LTF1x80MHz_{left} 0 LTF1x80MHz_{right} 0₂₃ -LTF1x80MHz_{left} 0 LTF1x8ONMz_{right}]. LTF1x80 MHz_{left} is an 80 MHz_{left} 1x LTF sequence in the 802.11ax standard. For a specific sequence, refer to the 802.11ax standard. LTF1x80 MHz_{right} is an 80 MHz_{right} 1x LTF sequence in the 802.11ax standard. For a specific sequence, refer to the 802.11ax standard.

A PAPR value of the LTF1x320M sequence in full bandwidth 320 MHz is 5.2606 dB. The LTF1x320M sequence has a small PAPR value in the full bandwidth 320 MHz.

### 3. 2x LTF sequence in the 240 MHz bandwidth (referred to as an LTF2x240M sequence for short)

3-1. A possible LTF2x240M sequence = [LTF2x80M 0₂₃ LTF2x80M 0₂₃ -LTF2x80M]. LTF2x80M is an 80 MHz 2x LTF sequence in the 802.11ax standard. For a specific sequence, refer to the 802.11ax standard.

The LTF2x240M sequence has a small PAPR value in various cases (including full bandwidth 240 MHz, various puncturing patterns for 240 MHz, and various multiple RU combinations for 240 MHz) in Table A for 240 MHz. For example, a PAPR value in a full bandwidth (pattern 1) is 9.8386 dB. PAPR values in other puncturing patterns are all less than 9.8386 dB.

3-2. A possible LTF2x240M sequence = [LTF2x160M 0₂₃ LTF2x80M]. LTF2x160M is a 160 MHz 2x LTF sequence in the 802.11ax standard. LTF2x80M is an 80 MHz 2x LTF sequence in the 802.11ax standard. For a specific sequence, refer to the 802.11ax standard.

A PAPR value of the LTF2x240M sequence in the full bandwidth 240 MHz (pattern 1) is 9.6745 dB.

3-3. A possible LTF2x240M sequence = [LTF2x160M 0₂₃ -LTF2x80M]. LTF2x160M is a 160 MHz 2x LTF sequence in the 802.11ax standard. LTF2x80M is an 80 MHz 2x LTF sequence in the 802. 11ax standard. For a specific sequence, refer to the 802.11ax standard.

The LTF2x240M sequence has a small PAPR value in Table A for 240 MHz. For example, a PAPR value in a full bandwidth (pattern 1) is 9.6745 dB. PAPR values in other puncturing patterns are all less than 9.6745 dB.

3-4. A possible LTF2x240M sequence = [LTF2x80Mₚₐᵣₜ₁ LTF2x80Mₚₐᵣₜ₂ -LTF2x80Mₚₐᵣₜ₃ LTF2x80Mₚₐᵣₜ₄ LTF2x80Mₚₐᵣₜ₅ 0₂₃ LTF2x80Mₚₐᵣₜ₁ LTF2x80Mₚₐᵣₜ₂ -LTF2x80Mₚₐᵣₜ₃ -LTF2x80Mₚₐᵣₜ₄ -LTF2x80Mₚₐᵣₜ₅ 0₂₃ LTF2x80Mₚₐᵣₜ₁ LTF2x80Mₚₐᵣₜ₂ -LTF2x80Mₚₐᵣₜ₃ LTF2x80Mₚₐᵣₜ₄ LTF2x80Mₚₐᵣₜ₅]. LTF2x80Mₚₐᵣₜ₁, LTF2x80Mₚₐᵣₜ₂, LTF2x80Mₚₐᵣₜ₃, LTF2x80Mₚₐᵣₜ₄, and LTF2x80Mₚₐᵣₜ₅ are an 80 MHzₚₐᵣₜ₁ 2x LTF sequence, an 80 MHzₚₐᵣₜ₂ 2x LTF sequence, an 80 MHzₚₐᵣₜ₃ 2x LTF sequence, an 80 MHzₚₐᵣₜ₄ 2x LTF sequence, and an 80 MHzₚₐᵣₜ₅ 2x LTF sequence in the 802.11ax standard, respectively. For a specific sequence, refer to the 802.11ax standard.

A PAPR value of the LTF2x240M sequence in the full bandwidth 240 MHz (pattern 1) is 9.4304 dB.

3-5. A possible LTF2x240M sequence = [LTF2x80Mₚₐᵣₜ₁ -LTF2x80Mₚₐᵣₜ₂ LTF2x80Mₚₐᵣₜ₃ LTF2x80Mₚₐᵣₜ₄ -LTF2x80Mₚₐᵣₜ₅ 0₂₃ LTF2x80Mₚₐᵣₜ₁ -LTF2x80Mₚₐᵣₜ₂ LTF2x80Mₚₐᵣₜ₃ -LTF2x80Mₚₐᵣₜ₄ LTF2x80Mₚₐᵣₜ₅ 0₂₃ - LTF2x80Mₚₐᵣₜ₁ LTF2x80Mₚₐᵣₜ₂ -LTF2x80Mₚₐᵣₜ₃ -LTF2x80Mₚₐᵣₜ₄ LTF2x80Mₚₐᵣₜ₅]. LTF2x80Mₚₐᵣₜ₁, LTF2x80Mₚₐᵣₜ₂, LTF2x80Mₚₐᵣₜ₃, LTF2x80Mₚₐᵣₜ₄, and LTF2x80Mₚₐᵣₜ₅ are an 80 MHzₚₐᵣₜ₁ 2x LTF sequence, an 80 MHzₚₐᵣₜ₂ 2x LTF sequence, an 80 MHzₚₐᵣₜ₃ 2x LTF sequence, an 80 MHzₚₐᵣₜ₄ 2x LTF sequence, and an 80 MHzₚₐᵣₜ₅ 2x LTF sequence in the 802. 11ax standard, respectively. For a specific sequence, refer to the 802. 11ax standard.

The LTF2x240M sequence has a small PAPR value in various cases in Table A for 240 MHz. For example, a PAPR value of the LTF2x240M sequence in a puncturing pattern is 9.4894 dB. PAPR values in other puncturing patterns are all less than 9.4894 dB.

### 4. 2x LTF sequence in the 320 MHz bandwidth (referred to as an LTF2x320M sequence for short)

4-1. A possible LTF2x320M sequence = [LTF2x80M 0₂₃ -LTF2x80M 0₂₃ -LTF2x80M 0₂₃ LTF2x80M]. LTF2x80M is an 80 MHz 2x LTF sequence in the 802.11ax standard. For a specific sequence, refer to the 802.11ax standard.

The LTF2x320M sequence has a small PAPR value in various cases (including full bandwidth 320 MHz, various puncturing patterns for 320 MHz, and various multiple RU combinations for 320 MHz) in Table B for 320 MHz. For example, a PAPR value of the LTF2x320M sequence in a full bandwidth is 9.8162 dB. PAPR values in other puncturing patterns are all less than 9.8162 dB.

4-2. A possible LTF2x320M sequence = [LTF2x80M 0₂₃ LTF2x80M 0₂₃ -LTF2x80M 0₂₃ - LTF2x80M]. LTF2x80M is an 80 MHz 2x LTF sequence in the 802.11ax standard. For a specific sequence, refer to the 802.11ax standard.

The LTF2x320M sequence has a small PAPR value in various puncturing patterns for 320 MHz. For example, a PAPR value of the LTF2x320M sequence in a puncturing pattern is 10.1765 dB. PAPR values in other puncturing patterns are all less than 10.1765 dB.

4-3. A possible LTF2x320M sequence = [LTF2x160M 0₂₃ LTF2x160M]. LTF2x160M is a 160 MHz 2x LTF sequence in the 802.11ax standard. For a specific sequence, refer to the 802.11ax standard.

A PAPR value of the LTF2x320M sequence in full bandwidth 320 MHz is 9.6763 dB.

4-3. A possible LTF2x320M sequence = [LTF2x160M 0₂₃ -LTF2x160M]. LTF2x160M is a 160 MHz 2x LTF sequence in the 802.11ax standard. For a specific sequence, refer to the 802.11ax standard.

The LTF2x320M sequence has a small PAPR value in various cases in Table B for 320M. For example, a PAPR value in a puncturing pattern is 10.5546 dB, and PAPR values in other patterns are all less than 10.5546 dB.

4-4. A possible LTF2x320M sequence = [LTF2x80Mₚₐᵣₜ₁ LTF2x80Mₚₐᵣₜ₂ LTF2x80Mₚₐᵣₜ₃ LTF2x80Mₚₐᵣₜ₄ LTF2x80Mₚₐᵣₜ₅ 0₂₃ LTF2x80Mₚₐᵣₜ₁ LTF2x80Mₚₐᵣₜ₂ LTF2x80Mₚₐᵣₜ₃ LTF2x80Mₚₐᵣₜ₄ LTF2x80Mₚₐᵣₜ₅ 0₂₃ LTF2x80Mₚₐᵣₜ₁ LTF2x80Mₚₐᵣₜ₂ LTF2x80Mₚₐᵣₜ₃ LTF2x80Mₚₐᵣₜ₄ LTF2x80Mₚₐᵣₜ₅ 0₂₃ LTF2x80Mₚₐᵣₜ₁ LTF2x80Mₚₐᵣₜ₂ LTF2x80Mₚₐᵣₜ₃ LTF2x80Mₚₐᵣₜ₄ LTF2x80M_{part5]}. LTF2x80Mₚₐᵣₜ₁, LTF2x80Mₚₐᵣₜ₂, LTF2x80Mₚₐᵣₜ₃, LTF2x80Mₚₐᵣₜ₄ and LTF2x80Mₚₐᵣₜ₅ are an 80 MHzₚₐᵣₜ₁ 2x LTF sequence, an 80 MHzₚₐᵣₜ₂ 2x LTF sequence, an 80 MHzₚₐᵣₜ₃ 2x LTF sequence, an 80 MHzₚₐᵣₜ₄ 2x LTF sequence, and an 80 MHzₚₐᵣₜ₅ 2x LTF sequence in the 802.11ax standard. For a specific sequence, refer to the 802.11ax standard.

LTF2x320M = [LTF2x80Mₚₐᵣₜ₁, LTF2x80Mₚₐᵣₜ₂, (-1) * LTF2x80Mₚₐᵣₜ₃, LTF2x80Mₚₐᵣₜ₄, LTF2x80Mₚₐᵣₜ₅, 0₂₃, LTF2x80Mₚₐᵣₜ₁, LTF2x8OMₚₐᵣₜ₂, (-1) * LTF2x80Mₚₐᵣₜ₃, (-1) * LTF2x80Mₚₐᵣₜ₄, (-1) * LTF2x80Mₚₐᵣₜ₅,0₂₃, LTF2x80Mₚₐᵣₜ₁, LTF2x80Mₚₐᵣₜ₂, (-1) * LTF2x80Mₚₐᵣₜ₃, LTF2x80Mₚₐᵣₜ₄, LTF2x80Mₚₐᵣₜ₅,0₂₃, LTF2x80Mₚₐᵣₜ₁, (-1) * LTF2x80Mₚₐᵣₜ₂, LTF2x80Mₚₐᵣₜ₃, LTF2x80Mₚₐᵣₜ₄, (-1) * LTF2x80Mₚₐᵣₜ₅]. The LTF2x320M sequence has a small PAPR value in pattern 1 for 320M. For example, a PAPR value in a puncturing pattern is 9.4363 dB, and PAPR values in other patterns are all less than 9.4363 dB.

LTF2x320M = [LTF2x80Mₚₐᵣₜ₁, (-1) * LTF2x80Mₚₐᵣₜ₂, LTF2x80Mₚₐᵣₜ₃, LTF2x80Mₚₐᵣₜ₄, (-1) * LTF2x80Mₚₐᵣₜ₅, 0₂₃, LTF2x80Mₚₐᵣₜ₁, (-1) * LTF2x80Mₚₐᵣₜ₂, LTF2x80Mₚₐᵣₜ₃, (-1) * LTF2x80Mₚₐᵣₜ₄, LTF2x80Mₚₐᵣₜ₅, 0₂₃, (-1) * LTF2x80Mₚₐᵣₜ₁, LTF2x80Mₚₐᵣₜ₂, (-1) * LTF2x80Mₚₐᵣₜ₃, (-1) * LTF2x80Mₚₐᵣₜ₄, LTF2x80Mₚₐᵣₜ₅, 0₂₃, (-1) * LTF2x80Mₚₐᵣₜ₁, LTF2x80Mₚₐᵣₜ₂, LTF2x80Mₚₐᵣₜ₃, LTF2x80Mₚₐᵣₜ₄, (-1) * LTF2x80Mₚₐᵣₜ₅]. The LTF2x320M sequence has a small PAPR value in various patterns for 320M (as described in Table B). For example, a PAPR value in a puncturing pattern is 9.6228 dB, and PAPR values in other patterns are all less than 9.6228 dB.

LTF2x320M = [LTF2x80Mₚₐᵣₜ₁, (-1) * LTF2x80Mₚₐᵣₜ₂, LTF2x80Mₚₐᵣₜ₃, LTF2x80Mₚₐᵣₜ₄, (-1) * LTF2x80Mₚₐᵣₜ₅, 0₂₃, LTF2x80Mₚₐᵣₜ₁, (-1) * LTF2x80Mₚₐᵣₜ₂, LTF2x80Mₚₐᵣₜ₃, (-1) * LTF2x80Mₚₐᵣₜ₄, LTF2x80Mₚₐᵣₜ₅, 0₂₃, (-1) * LTF2x80Mₚₐᵣₜ₁, LTF2x80Mₚₐᵣₜ₂, (-1) * LTF2x80Mₚₐᵣₜ₃, (-1) * LTF2x80Mₚₐᵣₜ₄, LTF2x80Mₚₐᵣₜ₅, 0₂₃, (-1) * LTF2x80Mₚₐᵣₜ₁, LTF2x80Mₚₐᵣₜ₂, LTF2x80Mₚₐᵣₜ₃, LTF2x80Mₚₐᵣₜ₄, (-1) * LTF2x80Mₚₐᵣₜ₅]. The LTF2x320M sequence has a small PAPR value in various patterns for 320M (as described in Table B). For example, a PAPR value in a puncturing pattern is 9.6228 dB, and PAPR values in other patterns are all less than 9.6228 dB.

LTF2x320M = [LTF2x80Mₚₐᵣₜ₁, LTF2x8OMₚₐᵣₜ₂, (-1) * LTF2x80Mₚₐᵣₜ₃, LTF2x80Mₚₐᵣₜ₄, LTF2x80Mₚₐᵣₜ₅, 0₂₃, LTF2x80Mₚₐᵣₜ₁, LTF2x8OMₚₐᵣₜ₂, (-1) * LTF2x80Mₚₐᵣₜ₃, (-1) * LTF2x80Mₚₐᵣₜ₄, (-1) * LTF2x80Mₚₐᵣₜ₅, 0₂₃, LTF2x80Mₚₐᵣₜ₁, (-1) * LTF2x80Mₚₐᵣₜ₂, LTF2x80Mₚₐᵣₜ₃, LTF2x80Mₚₐᵣₜ₄, (-1) * LTF2x80Mₚₐᵣₜ₅, 0₂₃, LTF2x80Mₚₐᵣₜ₁, LTF2x80Mₚₐᵣₜ₂, (-1) * LTF2x80Mₚₐᵣₜ₃, LTF2x80Mₚₐᵣₜ₄, LTF2x80M_{part5]}. The LTF2x320M sequence has a small PAPR value in pattern 1 for 320M. For example, a PAPR value in a puncturing pattern is 9.4363 dB, and PAPR values in other patterns are all less than 9.4363 dB.

LTF2x320M = [LTF2x80Mₚₐᵣₜ₁, (-1) * LTF2x80Mₚₐᵣₜ₂, (-1) * LTF2x80Mₚₐᵣₜ₃, (-1) * LTF2x80Mₚₐᵣₜ₄, LTF2x80Mₚₐᵣₜ₅, 0₂₃, (-1) * LTF2x80Mₚₐᵣₜ₁, LTF2x8OMₚₐᵣₜ₂, (-1) * LTF2x80Mₚₐᵣₜ₃, (-1) * LTF2x80Mₚₐᵣₜ₄, LTF2x80Mₚₐᵣₜ₅, 0₂₃, LTF2x80Mₚₐᵣₜ₁, LTF2x80Mₚₐᵣₜ₂, (-1) * LTF2x80Mₚₐᵣₜ₃, LTF2x80Mₚₐᵣₜ₄, LTF2x80Mₚₐᵣₜ₅, 0₂₃, LTF2x80Mₚₐᵣₜ₁, (-1) * LTF2x80Mₚₐᵣₜ₂, (-1) * LTF2x80Mₚₐᵣₜ₃, (-1) * LTF2x80Mₚₐᵣₜ₄, (-1) * LTF2x80M_{part5]}. The LTF2x320M sequence has a small PAPR value in various patterns for 320M (as described in Table B). For example, a PAPR value in a puncturing pattern is 10.2217 dB, and PAPR values in other patterns are all less than 10.2217 dB.

LTF2x320M = [LTF2x80Mₚₐᵣₜ₁, (-1) * LTF2x80Mₚₐᵣₜ₂, (-1) * LTF2x80Mₚₐᵣₜ₃, (-1) * LTF2x80Mₚₐᵣₜ₄, LTF2x80Mₚₐᵣₜ₅, 0₂₃, (-1) * LTF2x80Mₚₐᵣₜ₁, LTF2x8OMₚₐᵣₜ₂, (-1) * LTF2x80Mₚₐᵣₜ₃, (-1) * LTF2x80Mₚₐᵣₜ₄, LTF2x80Mₚₐᵣₜ₅, 0₂₃, LTF2x80Mₚₐᵣₜ₁, LTF2x80Mₚₐᵣₜ₂, (-1) * LTF2x80Mₚₐᵣₜ₃, LTF2x80Mₚₐᵣₜ₄, LTF2x80Mₚₐᵣₜ₅, 0₂₃, LTF2x80Mₚₐᵣₜ₁, (-1) * LTF2x80Mₚₐᵣₜ₂, (-1) * LTF2x80Mₚₐᵣₜ₃, (-1) * LTF2x80Mₚₐᵣₜ₄, (-1) * LTF2x80M_{part5]}. The LTF2x320M sequence has a small PAPR value in various patterns for 320M (as described in Table B). For example, a PAPR value in a puncturing pattern is 10.2217 dB, and PAPR values in other patterns are all less than 10.2217 dB.

### 5. 4x LTF sequence in the 240 MHz bandwidth (referred to as an LTF4x240M sequence for short)

5-1. A possible LTF4x240M sequence = [LTF4x80M 0₂₃ -LTF4x80M 0₂₃ -LTF4x80M]. LTF4x80M is an 80 MHz 4x LTF sequence in the 802. 11ax standard. For a specific sequence, refer to the 802. 11ax standard.

The LTF4x240M sequence has a small PAPR value in a plurality of puncturing patterns (namely, a full bandwidth and various puncturing patterns, or pattern 1 to pattern 10) for 240 MHz. For example, a PAPR value of the sequence in full bandwidth 240 MHz is 9.7091 dB. PAPR values in other puncturing patterns are all less than or equal to 9.7091 dB.

5-2. A possible LTF4x240M sequence = [LTF4x160M 0₂₃ LTF4x80M]. LTF4x160M is a 160 MHz 4x LTF sequence in the 802.11ax standard. LTF4x80M is an 80 MHz 4x LTF sequence in the 802.11ax standard. For a specific sequence, refer to the 802.11ax standard.

A PAPR value of the LTF4x240M sequence in full bandwidth 240 MHz is 9.0778 dB.

5-3. A possible LTF4x240M sequence = [LTF4x160M 0₂₃ -LTF4x80M]. LTF4x160M is a 160 MHz 4x LTF sequence in the 802.11ax standard. LTF4x80M is an 80 MHz 4x LTF sequence in the 802.11ax standard. For a specific sequence, refer to the 802.11ax standard.

The LTF4x240M sequence has a small PAPR value in a plurality of puncturing patterns (namely, a full bandwidth and various puncturing patterns, or pattern 1 to pattern 10) for 240 MHz. For example, a PAPR value of the sequence in a puncturing pattern for 240 MHz is 9.2698 dB. PAPR values in other puncturing patterns are all less than 9.2698 dB.

5-4. A possible LTF4x240M sequence = [LTF4x80MHz_{left} 0 LTF4x80MHz_{right} 0₂₃ LTF4x80MHz_{left} 0 - LTF4x80MHz_{rignt} 0₂₃ LTF4x80MHz_{left} 0 LTF4x80MHz_{rignt}]. LTF4x80 MHz_{left} is an 80 MHz_{left} 4x LTF sequence in the 802.11ax standard. LTF4x80 NMz_{right} is an 80 NMz_{right} 4x LTF sequence in the 802.11ax standard. For a specific sequence, refer to the 802.11ax standard.

A PAPR value of the LTF4x240M sequence in full bandwidth 240 MHz is 9.0778 dB.

5-5. A possible LTF4x240M sequence = [LTF4x80MHz_{left} 0 LTF4x80MHz_{right} 0₂₃ -LTF4x80MHz_{left} 0 LTF4x80MHz_{right} 0₂₃ -LTF4x80MHz_{left} 0 -LTF4x80MHz_{rignt}]. LTF4x80 MHz_{right} is an 80 MHz_{left} 4x LTF sequence in the 802. 11ax standard. LTF4x80 NMz_{right} is an 80 NMz_{right} 4x LTF sequence in the 802. 11ax standard. For a specific sequence, refer to the 802.11ax standard.

The LTF4x240M sequence has a small PAPR value in a plurality of puncturing patterns (namely, a full bandwidth and various puncturing patterns, or pattern 1 to pattern 10) for 240 MHz. For example, a PAPR value of the sequence in a puncturing pattern for 240 MHz is 9.2122 dB. PAPR values in other puncturing patterns are all less than 9.2122 dB.

### 6. 4x LTF sequence in the 320 MHz bandwidth (referred to as an LTF4x320M sequence for short)

6-1. A possible LTF4x320M sequence = [LTF4x80M 0₂₃ -LTF4x80M 0₂₃ -LTF4x80M 0₂₃ LTF4x80M]. LTF4x80M is an 80 MHz 4x LTF sequence in the 802.11ax standard. For a specific sequence, refer to the 802.11ax standard.

The LTF4x320M sequence has a small PAPR value in a plurality of puncturing patterns (namely, a full bandwidth and various puncturing patterns, or pattern 1 to pattern 10) for 320 MHz. For example, a PAPR value of the sequence in a puncturing pattern for 320 MHz is 10.2299 dB. PAPR values in other patterns are all less than 10.2299 dB. For example, a PAPR value in a full bandwidth (namely, pattern 1) is 9.8720 dB.

6-2. A possible LTF4x320M sequence = [LTF4x160M 0₂₃ LTF4x160M]. LTF4x160M is a 160 MHz 4x LTF sequence in the 802.11ax standard. For a specific sequence, refer to the 802.11ax standard.

A PAPR value of the LTF4x320M sequence in full bandwidth 320 MHz is 9.5100 dB.

6-3. A possible LTF4x320M sequence = [LTF4x160M 0₂₃ -LTF4x160M]. LTF4x160M is a 160 MHz 4x LTF sequence in the 802.11ax standard. For a specific sequence, refer to the 802.11ax standard.

The LTF4x320M sequence has a small PAPR value in a plurality of puncturing patterns (namely, a full bandwidth and various puncturing patterns, or pattern 1 to pattern 10) for 320 MHz. For example, a PAPR value of the sequence in a puncturing pattern for 320 MHz is 10.2731 dB. PAPR values in other puncturing patterns are all less than 10.2731 dB.

6-4. A possible LTF4x320M sequence = [LTF4x80MHz_{left} 0 LTF4x80MHz_{right} 0₂₃ -LTF4x80MHz_{left} 0 LTF4x80MHz_{right} 0₂₃ LTF4x80MHz_{left} 0 -LTF4x80MHz_{right} 0₂₃ -LTF4x80MHz_{left} 0 -LTF4x80MHz_{right}]. LTF4x80 MHz_{left} is an 80 MHz_{left} 4x LTF sequence in the 802.11ax standard. LTF4x80 NMz_{right} is an 80 NMz_{right} 4x LTF sequence in the 802.11ax standard. For a specific sequence, refer to the 802.11ax standard.

A PAPR value of the LTF4x320M sequence in full bandwidth 320 MHz is 9.1218 dB.

6-5. A possible LTF4x320M sequence = [LTF4x80MHz_{left} 0 -LTF4x80MHz_{right} 0₂₃ -LTF4x80MHz_{left} 0 -LTF4x80MHz_{right} 0₂₃ -LTF4x80MHz_{left} 0 LTF4x80MHz_{right} 0₂₃ LTF4x80MHz_{left} 0 LTF4x80MHz_{right}]. LTF4x80 MHz_{left} is an 80 MHz_{left} 4x LTF sequence in the 802.11ax standard. LTF4x80 NMz_{right} is an 80 NMz_{right} 4x LTF sequence in the 802.11ax standard. For a specific sequence, refer to the 802.11ax standard.

The LTF4x320M has a small PAPR value in a plurality of puncturing patterns (namely, a full bandwidth and various puncturing patterns, or pattern 1 to pattern 10) for 320 MHz. For example, a PAPR value of the sequence in a puncturing pattern for 320 MHz is 10.1482 dB. PAPR values in other puncturing patterns are all less than 10.1482 dB.

The foregoing describes the method for transmitting/receiving a physical layer protocol data unit provided in embodiments of this application. The following describes a product in embodiments of this application.

An embodiment of this application provides an apparatus for transmitting a physical layer protocol data unit, including:
a generation unit, configured to generate a physical layer protocol data unit (physical layer protocol data unit, PPDU), where the PPDU includes a long training field (long training field, LTF), a length of a frequency-domain sequence of the LTF is greater than a first length, and the first length is a length of a frequency-domain sequence of an LTF of a PPDU transmitted over a channel whose bandwidth is 160 MHz; and
a sending unit, configured to send the PPDU over a target channel, where a bandwidth of the target channel is greater than 160 MHz.

A phase rotation at a non-pilot location, a plurality of puncturing patterns for 240 MHz/320 MHz, and multiple RU combination are considered for the apparatus for transmitting a physical layer protocol data unit provided in this embodiment of this application, so that the finally provided frequency-domain sequence of the LTF has a small PAPR value on the multiple RU combination in a plurality of puncturing patterns for 240 MHz/320 MHz.

An embodiment of this application provides an apparatus for receiving a physical layer protocol data unit, including:
a receiving unit, configured to receive a physical layer protocol data unit PPDU over a target channel, where the PPDU includes a long training field, a length of a frequency-domain sequence of the long training field is greater than a first length, the first length is a length of a frequency-domain sequence of a long training field of a PPDU transmitted over a channel whose bandwidth is 160 MHz, and a bandwidth of the target channel is greater than 160 MHz; and
a processing unit, configured to parse the PPDU.

According to the apparatus for receiving a physical layer protocol data unit provided in this embodiment of this application, a frequency-domain sequence of the LTF parsed by the apparatus has a small PAPR value on multiple RU combination in a plurality of puncturing patterns for 240 MHz/320 MHz.

It should be understood that, the apparatus for transmitting/receiving a physical layer protocol data unit provided in embodiments of this application has all functions and all technical details of the foregoing method for transmitting/receiving a physical layer protocol data unit. For specific technical details, refer to the foregoing method. Details are not described herein again.

The foregoing describes the apparatus for transmitting/receiving a physical layer protocol data unit in embodiments of this application. The following describes a possible product form of the apparatus for transmitting/receiving a physical layer protocol data unit. It should be understood that any product in any form that has a function of the foregoing apparatus for transmitting/receiving a physical layer protocol data unit falls within the protection scope of embodiments of this application. It should be further understood that the following description is merely an example, and a product form of the apparatus for transmitting/receiving a physical layer protocol data unit in embodiments of this application is not limited thereto.

In a possible product form, the apparatus for transmitting/receiving a physical layer protocol data unit described in embodiments of this application may be implemented by using a general bus architecture.

The apparatus for transmitting a physical layer protocol data unit includes a processor and a transceiver. The processor is configured to generate a physical layer protocol data unit (physical layer protocol data unit, PPDU), where the PPDU includes a long training field (long training field, LTF), a length of a frequency-domain sequence of the LTF is greater than a first length, and the first length is a length of a frequency-domain sequence of an LTF of a PPDU transmitted over a channel whose bandwidth is 160 MHz. The transceiver is configured to send the PPDU over a target channel, where a bandwidth of the target channel is greater than 160 MHz.

It should be understood that, the apparatus for transmitting a physical layer protocol data unit has all functions and all technical details of the foregoing method for transmitting a physical layer protocol data unit. For specific technical details, refer to the foregoing method. Details are not described herein again.

Optionally, the apparatus for transmitting a physical layer protocol data unit may further include a memory. The memory is configured to store instructions executable by the processor.

The apparatus for receiving a physical layer protocol data unit includes a processor and a transceiver. The transceiver is configured to receive a physical layer protocol data unit PPDU over a target channel, where the PPDU includes a long training field, a length of a frequency-domain sequence of the long training field is greater than a first length, the first length is a length of a frequency-domain sequence of a long training field of a PPDU transmitted over a channel whose bandwidth is 160 MHz, and a bandwidth of the target channel is greater than 160 MHz. The processor is configured to parse the PPDU.

It should be understood that, the apparatus for receiving a physical layer protocol data unit has all functions and all technical details of the foregoing method for receiving a physical layer protocol data unit. For specific technical details, refer to the foregoing method. Details are not described herein again.

Optionally, the apparatus for receiving a physical layer protocol data unit may further include a memory. The memory is configured to store instructions executable by the processor.

In a possible product form, the apparatus for transmitting/receiving a physical layer protocol data unit in embodiments of this application may be implemented by a general-purpose processor.

The apparatus for transmitting a physical layer protocol data unit includes a processing circuit and a transceiver interface. The processing circuit is configured to generate a physical layer protocol data unit (physical layer protocol data unit, PPDU), where the PPDU includes a long training field (long training field, LTF), a length of a frequency-domain sequence of the LTF is greater than a first length, and the first length is a length of a frequency-domain sequence of an LTF of a PPDU transmitted over a channel whose bandwidth is 160 MHz. The transceiver interface is configured to send the PPDU over a target channel, where a bandwidth of the target channel is greater than 160 MHz.

Optionally, the apparatus for transmitting a physical layer protocol data unit may further include a storage medium. The storage medium is configured to store instructions executable by the processor.

It should be understood that, the apparatus for transmitting a physical layer protocol data unit has all functions and all technical details of the foregoing method for transmitting a physical layer protocol data unit. For specific technical details, refer to the foregoing method. Details are not described herein again.

The apparatus for receiving a physical layer protocol data unit includes a processing circuit and a transceiver interface. The transceiver interface is configured to receive a physical layer protocol data unit PPDU over a target channel, where the PPDU includes a long training field, a length of a frequency-domain sequence of the long training field is greater than a first length, the first length is a length of a frequency-domain sequence of a long training field of a PPDU transmitted over a channel whose bandwidth is 160 MHz, and a bandwidth of the target channel is greater than 160 MHz. The processing circuit is configured to parse the PPDU.

Optionally, the apparatus for receiving a physical layer protocol data unit may further include a storage medium. The storage medium is configured to store instructions executable by the processing circuit.

It should be understood that, the apparatus for receiving a physical layer protocol data unit has all functions and all technical details of the foregoing method for receiving a physical layer protocol data unit. For specific technical details, refer to the foregoing method. Details are not described herein again.

In a possible product form, the apparatus for transmitting/receiving a physical layer protocol data unit described in embodiments of this application may be further implemented by using one or more FPGAs (field programmable gate arrays), a PLD (programmable logic device), a controller, a state machine, a logic gate, a discrete hardware component, any other proper circuit, or any combination of circuits capable of performing various functions described in this application.

An embodiment of this application further provides a computer program product. The computer program product includes computer program code. When the computer program code is run on a computer, the computer is enabled to perform the method in the embodiment shown in FIG. 5.

An embodiment of this application further provides a computer-readable medium. The computer-readable medium stores program code. When the program code is run on a computer, the computer is enabled to perform the method in the embodiment shown in FIG. 5.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one location, or may be distributed on a plurality of network units. Some or all of the units may be selected based on actual requirements to achieve the objective of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in this application essentially, the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for transmitting a physical layer protocol data unit, comprising:
generating a physical layer protocol data unit PPDU, wherein the PPDU comprises a long training field, a length of a frequency-domain sequence of the long training field is greater than a first length, and the first length is a length of a frequency-domain sequence of a long training field of a PPDU transmitted over a channel whose bandwidth is 160 MHz; and
sending the PPDU over a target channel, wherein a bandwidth of the target channel is greater than 160 MHz.

2. A method for receiving a physical layer protocol data unit, comprising:
receiving a physical layer protocol data unit PPDU over a target channel, wherein the PPDU comprises a long training field, a length of a frequency-domain sequence of the long training field is greater than a first length, the first length is a length of a frequency-domain sequence of a long training field of a PPDU transmitted over a channel whose bandwidth is 160 MHz, and a bandwidth of the target channel is greater than 160 MHz; and
parsing the PPDU.

3. An apparatus for transmitting a physical layer protocol data unit, comprising:
a generation unit, configured to generate a physical layer protocol data unit PPDU, wherein the PPDU comprises a long training field, a length of a frequency-domain sequence of the long training field is greater than a first length, and the first length is a length of a frequency-domain sequence of a long training field of a PPDU transmitted over a channel whose bandwidth is 160 MHz; and
a sending unit, configured to send the PPDU over a target channel, wherein a bandwidth of the target channel is greater than 160 MHz.

4. An apparatus for receiving a physical layer protocol data unit, comprising:
a receiving unit, configured to receive a physical layer protocol data unit PPDU over a target channel, wherein the PPDU comprises a long training field, a length of a frequency-domain sequence of the long training field is greater than a first length, the first length is a length of a frequency-domain sequence of a long training field of a PPDU transmitted over a channel whose bandwidth is 160 MHz, and a bandwidth of the target channel is greater than 160 MHz; and
a processing unit, configured to parse the PPDU.

5. A computer-readable storage medium, configured to store a computer program, wherein the computer program comprises instructions for implementing the method according to any one of claims 1 to 2.

6. A computer product, wherein the computer product comprises instructions for implementing the method according to any one of claims 1 to 2.
